# EUROPEAN PATENT SPECIFICATION

(11) **EP 1 785 680 B1**
(45) Date of publication and mention of the grant of the patent: **27.05.2015**
(21) Application number: 06254236.0
(22) Date of filing: 11.08.2006
(51) Int. Cl.: F25B 17/08, F25B 9/12

(54) **Cooling apparatus**
Kühlgerät
Appareil de refroidissement

(30) Priority: 14.11.2005 GB 0523161
(43) Date of publication of application: 16.05.2007
(73) Proprietor: Oxford Instruments Nanotechnology Tools Limited, Oxon OX13 5QX (GB)
(72) Inventor: Mikheev, Vladimir, c/o Oxford Instruments, Abingdon, Oxon, OX13 5QX (GB); Noonan, Paul, c/o Oxford Instruments, Abingdon, Oxon, OX13 5QX (GB); Adams, Alvin, c/o Oxford Instruments, Abingdon, Oxon, OX13 5QX (GB)
(74) Representative: Lord, Michael

(56) References cited:
- EP-A- 1 387 133
- EP-A1- 0 412 161
- EP-A1- 0 805 317
- DE-U1- 8 604 148
- GB-A- 1 502 214
- JP-A- 8 283 009
- JP-A- 8 283 010
- SU-A- 330 785
- SU-A- 966 450
- SU-A- 1 103 055
- SU-A1- 1 528 057
- SALMELIN R H ET AL: "A CRYOPUMP-OPERATED ROTATING NUCLEAR DEMAGNETIZATION CRYOSTAT FOR RESEARCH ON SUPERFLUID 3HE" JOURNAL OF LOW TEMPERATURE PHYSICS, PLENUM PRESS, NEW YORK, US, vol. 76, no. 1/2, 1 July 1989 (1989-07-01), pages 83-106, XP000035857
- BHATIA R S ET AL: "A three-stage helium sorption refrigerator for cooling of infrared detectors to 280 mK" CRYOGENICS, ELSEVIER, KIDLINGTON, GB, vol. 40, no. 11, 2000, pages 685-691, XP004233513 ISSN: 0011-2275
- LAVRENCHENKO G K ET AL: "CHARACTERISTICS OF REFRIGERATOR WITH ADSORPTION PUMPING OF LIQUID WORKING AGENT AT TEMPERATURES LOWER THAN 65 K" CRYOGENICS, ELSEVIER, KIDLINGTON, GB, vol. 34, no. 3, 1 March 1994 (1994-03-01), pages 227-235, XP000426898 ISSN: 0011-2275

## Description

The present invention relates to cooling apparatus, particularly for cooling to cryogenic temperatures.

### Background to the Invention

The use of low temperatures is important in a number of technical fields. Examples of these fields include general characterisation experiments, cryogenic sensors and mass spectrometry. Low temperatures are normally used in these fields so as to produce a highly stable environment in which thermal noise is minimised. Helium-3 or helium-4 is typically used as the coolant due to its very low boiling point.

It is desirable that the refrigerators providing such low temperature cooling can do so in a continuous manner. However, not all refrigerators can be operated continuously (effectively indefinitely). For example, a number are "single-shot" in that they typically operate only whilst an amount of liquid coolant is being caused to vaporise. Once all of the coolant has been evaporated the cooling effect ends and the refrigerators have to be "regenerated" prior to subsequent use. An adsorption pump is typically used to vaporise the coolant in a single-shot refrigerator. Despite this disadvantage, single-shot refrigerators (SSRs) have many advantages including the fact that they often have no moving parts (thus reducing vibration) and are accordingly reliable and cheap.

A continuous operation effect can be provided by the use of two (or more) such SSRs, each being used to cool a common cold platform. The refrigerators are operated in turn, with one in its regeneration mode whilst the other is in its cooling mode.

A prior art continuous-operation cryogenic cycle refrigerator (CCR) using two single-shot helium-3 SSRs is disclosed in EP-A-1387133. Each SSR is in thermal contact with a cold platform that is to be maintained at a target base temperature (typically 0.3-0.6K) using heat pipes. The helium-3 liquid at the cold platform evaporates, causing cooling, and condenses on the cold surface of the one of the SSRs that is in the cooling mode. This cold condensate then falls back into the cold platform, completing the cycle. By alternately using each SSR in their cooling and regeneration modes, a continuous cooling of the cold platform is achieved. Other examples are discussed in "Dilution Refrigerator with Condensation Pumping", V.E. Sivokon et al., Cryogenics 1992 Vol. 32 ICEC Supplement (ICEC 14 Proceedings) and Cryogenics April 1984.

Nevertheless there are problems in such systems. When a SSR enters the regeneration mode there will be dew left on its (previously) cold surface. This dew evaporates during regeneration and condenses on a cold surface elsewhere in the system. Typically, this dew will recondense in the cold platform (or lower part of the heat pipe), the latent heat of condensation causing undesirable heating at that location. This creates temporary fluctuations in the temperature of the cold platform that can significantly degrade the functionality of the apparatus.

The periodical operation of each helium-3 SSR therefore causes evaporation of the dew from its respective cool surface at the start of the regeneration stage of each SSR and this vapour subsequently recondenses on any colder surfaces (cold spots) within the system and causes heating at those locations.

In the case of a prior-art helium-3 evaporation refrigerator, the dew recondensation mainly occurs directly in the cold platform. However, in the case of a prior-art helium-3:helium-4 cryogenic cycle dilution refrigerator (CCDR), the dew recondensation could occur in the "Still" or a helium-3 return line. All of these processes are undesirable and can disturb the operation of refrigerators, causing temporal fluctuations in the base temperature.

It is therefore desired to improve the operation of such apparatus and to minimize the effect of such thermal fluctuations as a result of the regeneration cycles of the SSRs.

### Summary of the Invention

In accordance with the invention, we provide cooling apparatus comprising:-
first and second single-shot refrigerators having respective first and second condensation surfaces, wherein the first and second condensation surfaces are provided within an enclosure, the said surfaces being selectively cooled when in use by the respective first and second single-shot refrigerators such that coolant gas condenses on the surfaces as liquid coolant;
the enclosure containing a coolant gas; and,
a cold platform which, when in use, receives the liquid coolant from the condensation surfaces; characterised in that:-
the enclosure is adapted to provide a path for gaseous coolant between the first and second condensation surfaces, the path having a lower hydraulic impedance than that between each of the condensation surfaces and the cold platform.

We have realised that the problems caused by the regeneration cycles can be addressed by providing a low hydraulic impedance path between the first and second condensation surfaces. This means that the evaporated dew from a warmed condensation surface will preferentially flow to the othercooled condensation surface thereby condensing on the cold condensation surface of the SSR in cooling mode rather than in the cold platform. This significantly reduces temperature fluctuations during the cooling-regeneration change-over period of the SSRs. Similarly the invention provides advantages when the SSRs are used to cool a dilution refrigerator CCDR. In prior art CCDRs, cooled using alternate single-shot refrigerators, the dew evaporation-recondensation may cause fluctuations in the temperature of the mixing chamber of a dilution refrigerator. These are substantially reduced according to the present invention.

The hydraulic impedance of the path between the condensation surfaces is preferably much lower than the impedance between each of the condensation surfaces and the cold platform. The greater the difference between these respective paths, the greater the effect of the invention and thereby the improvement over the prior art systems. Preferably the hydraulic impedance is at least 2 times lower, more preferably at least 5 times lower and most preferably at least 10 times lower than that between each of the condensation surfaces and the cold platform. Since the hydraulic impedance is proportional to distance and inversely proportional to the square of the cross-sectional dimension of the path, the most compact apparatus can be achieved with the greatest effect by providing a broad gas flow path between the condensation surfaces.

The path providing the low hydraulic impedance can take a number of forms. When the enclosure comprises a tube between each of the condensation surfaces and the cold platform, then the path may be a by-pass tube positioned between the first and second condensation surfaces to provide the flow path. The tubes connecting the condensation surfaces and the cold platform may comprise heat pipes. Rather than providing individual tubes, the first and second condensation surfaces may be provided within a common chamber volume. In this case, the enclosure may take the form of a single chamber within which each condensation surface is contained such that each has an unobstructed line-of-sight to the other. This maximizes the cross-sectional area of the gas flow path between the condensation surfaces.

The term "enclosure" should therefore be interpreted in a broad sense to include various different configurations which provide the gas and liquid communication routes between the condensation surfaces and the cold platform, albeit either as a single chamber, connected chambers, or lumens.

The cold platform may be provided adjacent the common chamber or may be separated from the main volume of such a chamber by a tube. Regardless of the form that the enclosure takes, preferably the distance between the first and second condensation surfaces is less than the distances between each of the first and second condensation surfaces and the cold platform.

Although much of the cold platform is at substantially the same temperature during operation, it is preferred that the distance to the "cold platform" is measured to the surface of the coolant liquid within the cold platform.

Typically at least one and preferably each of the single-shot refrigerators comprises an adsorption pump to evaporate the coolant liquid. However, a vacuum pump or expansion chamber may also be used to evaporate the coolant. One or more of these techniques may alternatively be used in combination. Each SSR may also comprise two or more adsorption pumps. Whilst the invention is described in terms of two SSRs (the minimum needed for continuous operation), it is intended to include any number of SSRs greater than two.

The condensation surfaces cooled by the SSRs are typically metallic surfaces in thermal contact with a pool of coolant (such as liquid helium-3), the coolant being cooled by self-evaporation caused in turn by a forced pressure reduction due to the operation of, for example, an adsorption pump. The surfaces may be provided with projections such as spikes to not only promote the formation of droplets, but to also cause these to be removed from the surface (to allow further coolant gas to condense) and to promote their passage away from the surface to the cold platform under the action of gravity. However, alternatively each condensation surface may be provided with a hollow frustoconical condenser formed from a high thermal conductivity metal such as copper and arranged such that the apex is distal from the condensation surface. A spiral cut-away groove is located within the surface of the condenser to encourage condensate to flow, under gravity, towards the apex where it drips towards the cold platform beneath.

Whilst the cold platform may itself provide the direct cooling of apparatus such as sensors, it may also comprise part of a dilution refrigerator when extremely low temperatures are desired to be produced for extended periods. The enclosure and particularly the common chamber may therefore be provided in fluid communication with the cold platform. The cold platform in this case may take the form of a mixing chamber of a dilution refrigerator or may be in fluid communication with such a mixing chamber by a supply line.

The dilution refrigerator typically also comprises a still together with a conduit providing gaseous communication between the still and the common chamber volume (enclosure), so as to return gaseous coolant from the still to the common chamber.

Although the invention has been discussed above with regard to ultra-low temperature devices, it is not intended to be so limited. Whilst typical coolants include helium-3 and helium-4, it may also be used with other higher temperature coolants such as nitrogen. Consequently, whilst the apparatus may most advantageously by operated in the field of cryogenic cooling (below about 100 K) it can be applied to higher temperature applications (in principle at any temperature) where extremely stable cooling is required, provided suitable coolants are used.

Some examples of cooling apparatus according to the present invention are now described with reference to the accompanying drawings, in which:-

### Brief Description of Drawings

Figure 1 shows a first example of the invention utilising a bypass tube;
Figure 2 shows a second example of the invention having a common chamber to provide a low hydraulic impedance path; and
Figure 3 shows a third example of the invention using a cold platform to drive the operation of a dilution refrigerator.

### Description of Preferred Examples

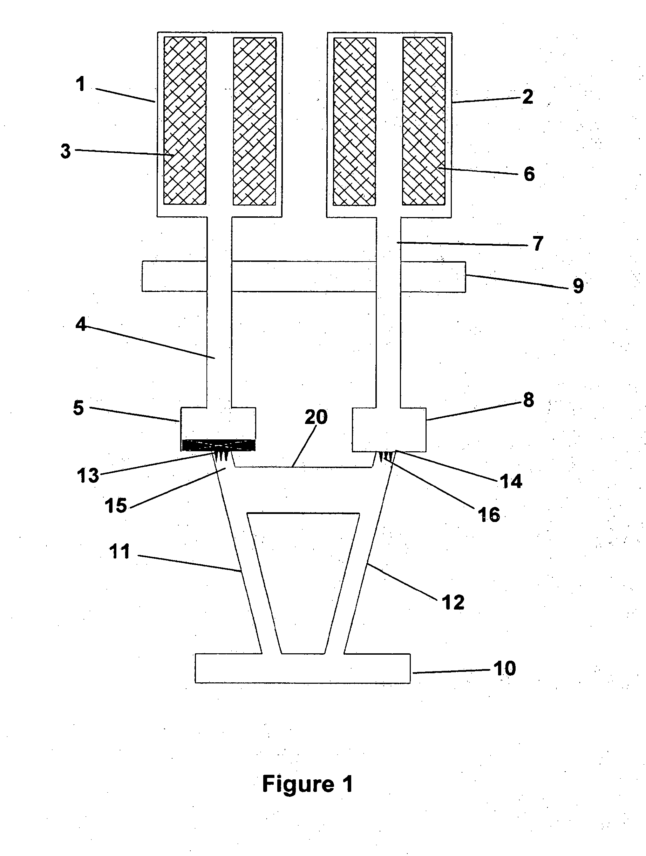

A first example of cooling apparatus according to the invention is now described with reference to Figure 1, this example illustrating the invention with the use of a "by-pass" tube. The first example has first and second single shot refrigerators (SSRs), these being labelled 1 and 2 respectively. Each of these SSRs 1, 2 comprises an adsorption pump, a pipe and a remote chamber. With reference to the first SSR 1, a first adsorption pump is shown at 3, this comprising a volume containing an adsorbent material such as finely divided carbon. A first pipe 4 has an upper end opening into the internal volume of the first adsorption pump 3. The first pipe 4 takes the general form of a tube, with the lower end opening into a small first chamber 5 which is use (in a cooling mode) contains an amount of liquid coolant (typically helium-3 in this case). The second single-shot refrigerator likewise is provided with a second adsorption pump 6, a second pipe 7 and second chamber 8. A heat exchanger 9 is illustrated at a location along the first and second pipes 4, 7. In the case of each SSR, the heat exchanger 9 is operated initially to locally cool the gaseous coolant within the first and second pipes 4, 7 to about 3K, thereby causing it to condense and accumulate in the first and second chambers 5, 8.

The SSRs 1, 2 operate in a known manner, namely by the adsorption of gaseous coolant which promotes evaporation of the liquid coolant within the chamber at the lower end of the respective pipe. This evaporation causes a reduction in the temperature of the remaining liquid coolant. The SSRs operate in a cooling mode until all of the coolant has been evaporated. In order to provide a further cooling operation, the carbon adsorbent must be regenerated, typically by heating the adsorbent material causing it to desorb the coolant which can then be cooled so as to again form the pool of coolant liquid within the respective chamber. This is discussed further in EP-A-1387133. Note that the respective heating devices used to heat the adsorbent material in the SSRs 1, 2, are not illustrated in Figure 1.

Whilst the first and second tubes 4, 7 are illustrated as having a vertical orientation in Figure 1, this is not essential. The only requirements are that the liquid within the respective first and second chambers 5, 8 is not able to flow directly into the adsorption pump volume which contains the carbon adsorbent material and that the heat exchanger 9 is located such that the condensed coolant flows into the respective first and second chambers 5, 8.

At the base of the apparatus a cold platform 10 is provided. It is this part of the apparatus that is desired to be cooled to a stable and low temperature, for example 0.3 to 0.6 Kelvin. It is desirable that the temperature of the cold platform 10 remains extremely constant and is therefore not subject to fluctuations. In the present example the cold platform is used to directly cool apparatus for performing very sensitive measurements at cryogenic temperatures. Such apparatus may include transition edge sensors or superconducting tunnelling junction devices. The cold platform 10 may also be used to provide a cold environment for characterising a sample.

The cold platform 10 comprises a chamber which in use is partially filled with a liquid coolant. First and second heat pipes 11, 12 are provided and which connect the interior of the chamber of the cold platform 10 to the condensation surfaces 13, 14 of the first and second chambers 5, 8. The first and second heat pipes 11, 12 take the general form of tubes, the lower end of each opening into the upper interior part of the cold platform chamber. The upper end of each of the first and second heat pipes 11, 12 is connected directly to the lower part of the first and second chambers 5, 8. Each heat pipe is therefore terminated by a part of the lower wall of the first and second chambers 5, 8. Preferably the entire bottom part of each of these chambers constitutes the end of each heat pipe.

The lower parts of the first and second chambers 5, 8 which constitute the ends of the first and second heat pipes 11, 12 form first and second condensation surfaces 13, 14. Upon each of these surfaces, projecting downwards and into the respective heat pipes, projections 15 (for the first heat pipe 11) and 16 (for the second heat pipe 12) are provided. These projections are mounted directly to the first and second condensation surfaces 13, 14.

A by-pass tube 20 is provided at a position which is adjacent the first and second condensation surfaces 13, 14,. This by-pass tube 20 directly connects the interiors of the respective first and second heat pipes 11, 12. The by-pass tube diameter is larger than that of the respective heat pipes.

In addition to the apparatus shown schematically in Figure 1 (and in the later described examples), it will be appreciated that the apparatus described herein is positioned in use within a cryostat to ensure prolonged low temperature operation and temperature stability. Such cryostats are well known and are therefore not described further here although typically these include vacuum chambers and radiation shields. In the present first example, the liquid coolant within the first and second chambers 5, 8 and the cold platform 10 is helium-3. Whilst helium-4 could be used for a given temperature, helium-3 has a higher vapour pressure and can be used at a lower temperature.

The by-pass tube 20, first and second heat pipes 11, 12 and the internal volume of the cold platform 10 form an enclosure which is sealed and contains an amount of helium-3 coolant, partially in the liquid form as a pool within the cold platform 10, and partially in gaseous form as the "vapour pressure" above the liquid.

The operation of the apparatus in accordance with Figure 1 will now be described.

The SSRs 1, 2 during use, are either in one of two modes, these being a cooling mode and a regeneration mode. Each is normally in the opposite mode with respect to the other. It is for this reason that two SSRs are provided since alone they cannot provide a continuous operation. In Figure 1, the first SSR 1 is shown within the cooling mode and the second SSR is within the regeneration mode. When in the cooling mode, the first SSR cools the first condensation surface 13 by causing the evaporation of the liquid coolant within the first chamber 5. The cooling effect persists as long as some liquid coolant is available to evaporate within the first chamber 5 and first pipe 4, this being adsorbed in the adsorbent material of the adsorption pump 3. Within the first heat pipe 11 beneath the first condensation surface 13, a vapour pressure of gaseous helium-3 coolant exists, with a pool of liquid helium-3 sitting at the base of the cold platform 10. The cooling of the first condensation surface 13 (this being the coldest part of the system when in cooling mode), causes condensation of the gaseous coolant upon the surface and the first projections 15. Liquid droplets of coolant accumulate upon the first projections 15 and are drawn away from the first condensation surface 13 so as to allow further gaseous coolant to condense. The droplets fall from the ends of the projections and pass down the first heat pipe 11 to join the pool of liquid coolant within the cold platform 10. The angling of the heat pipes with respect to the vertical direction promotes the separation of the flows of liquid (in one direction) and gas (in the reverse direction) within the heat pipes.

The pool of liquid within the cold platform 10 is therefore constantly replenished by cold liquid from the first condensation surface 13 whilst the first SSR is within the first cooling mode. Heat input from the environment, or from the operation of devices or other experimental apparatus in thermal communication with the cold platform 10 causes evaporation of the liquid coolant, as does the fact that condensation in one part of the system causes an overall reduction in pressure which is equilibrated by further evaporation. The cold platform 10 therefore remains cooled by these processes.

Once all of the liquid within the first chamber 5 has been evaporated, the cooling apparatus as a whole requires a switch-over between the operation of the first and second SSRs in order to continue the cooling effect. Whilst the SSR 1 is within the cooling mode, the SSR 2 is within a regeneration mode which means that a heat input is provided, using a heater, to the adsorbent material within the second adsorption pump 6. This causes the coolant adsorbed within the material to be desorbed and, due to the cold environment provided by the heat exchanger, this desorbed material, at least in the region of the second chamber 8, condenses to reform a pool of liquid coolant. Once the regeneration operation has been performed, the second SSR is ready to provide the cooling effect and this is begun prior to all of the coolant within the first chamber 5 (SSR 1) being used up so as to ensure a continuous operation.

As the cooling responsibility is switched over between the first and second SSRs, the coolant gas begins to condense upon the second condensation surface 14 and respective second projections 16. As in the case of the first heat pipe 11, the liquid coolant flows along the second heat pipe 12 into the common chamber of the cold platform where a pool of liquid coolant persists at the operational temperature.

Importantly, as the final liquid evaporates from the first chamber 5 of the first SSR 1, liquid remains upon the first condensation surface 13 and first projections 15. This region then begins to warm relatively due to the absence of further cooling by evaporation of the pool within the first chamber 5 of the SSR 1. This in turn causes the re-evaporation of coolant at the first condensation surface 13 and projections which then potentially may travel in an undesirable manner to the cold platform 10 (due to the gas pressure gradient between the condensation surface 13 and the cold platform) whereby undesirable temperature fluctuations would then occur. This produces a significant and measurable problem within the prior art. However, with the present invention, and as illustrated within the first example, the by-pass tube 20 provides a path of low hydraulic impedance with respect to the first heat pipe 11. Since the by-pass tube 20 provides preferably a substantially lower hydraulic impedance, the majority of the evaporated coolant from the first condensation surface and first projections 13, 15, travels along the by-pass tube and condenses on the cold surface of the second condensation surface 14 and corresponding second projection 16 where it is harmlessly condensed at the correct temperature for cooling the cold platform 10. The relatively warm vapour is therefore prevented largely from reaching the cold platform 10 and as a result a significant improvement in temperature stability of the cold platform 10 is provided.

Without such a by-pass tube 20, the latent heat of condensation would be dissipated into the cold platform 10 and cause it to heat. It will be appreciated that a similar effect occurs upon the switching from cooling to regeneration modes of the second SSR 2.

The periodic operation of the helium-3 SSRs therefore causes evaporation of dew from the condensation surfaces at the start of the regeneration stage for each SSR and this vapour subsequently will re-condense on any colder that it encounters within the system thereby causing heating at those locations by the effect of latent heat of condensation. In prior art systems without a low hydraulic impedance path between the condensation surfaces, the re-condensation undesirably occurs directly in the cold platform. In prior SSR devices without such protection against the undesirable evaporation-condensation effect, the instability in the temperature of the cold platform has been measured as up to 50 mK. This is simply unacceptable in many applications. In contrast, in the present invention however, this is largely avoided.

It will be appreciated that the cross-sectional area of the by-pass tube 20 is preferably much larger than that of the first and second heat pipes 11, 12 so that the hydraulic flow impedance is therefore considerably less. A second example of a cooling apparatus according to the invention is now described.

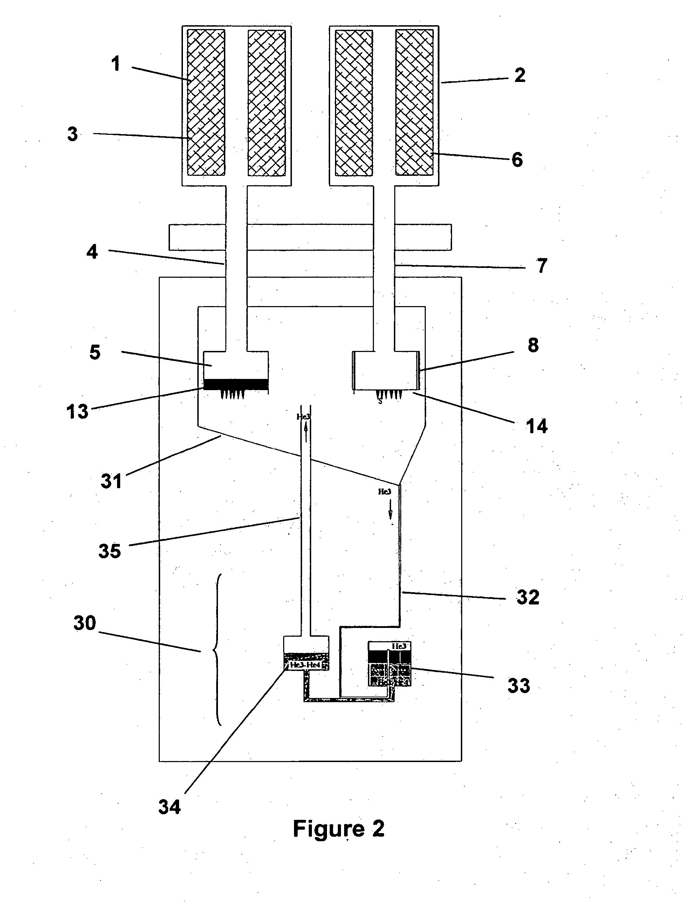

In the second example as illustrated in Figure 2, apparatus similar to that within the first example of Figure 1 is indicated with similar reference numerals. In this example, the two SSRs 1 and 2 are used to cool a cold platform which in this case takes the form of part of a dilution refrigerator 30. In this case, the by-pass tube 20 of the first example is replaced by a common chamber 31 which contains each of the first chambers 5, 8 and parts of the tubes 4, 7 of the SSRs. The provision of each of the chambers 5, 8 within such a common chamber 31 ensures that the hydraulic impedance between the first and second condensation surfaces 13 and 14 is minimised.

In this case it will also be noted that the first and second heat pipes 11, 12 of the first example have been replaced by the lower part of the common chamber 31. This is because in the second example, the liquid from the first and second condensation surfaces is provided to the mixing chamber 33 of the dilution refrigerator 30. A narrow line 32 is used to provide the liquid to the interior of the mixing chamber which is illustrated at 33 in Figure 2. As is known, dilution refrigerators are a means by which very low cryogenic temperatures can be provided and as such, dilution refrigerators have a mixing chamber (such as 33) in which the mixed isotopes (such as helium-3 and helium-4) are in fluid communication with a "still" (illustrated at 34 in Figure 2).

According to this example, the vapour within the still 34 (above the liquid)is in gaseous communication with the interior of the enclosure 31 via a return line 35. The capillary line 32 therefore acts as a supply line for the dilution refrigerator 30. This, together with the return line 35, provides circulation of the helium-3 isotope to drive the dilution refrigerator.

In the example of Figure 2, thermal instability in the temperature of the helium-3 passing down the supply line of the capillary line 32 is largely prevented by the extremely low hydraulic flow impedance between the first and second condensation surfaces 13,14 due to the geometry of the common chamber 31 forming an enclosure.

Although a common enclosure 31 is shown in the second example for cooling part of a dilution refrigerator 30, such a common enclosure could also be used to cool a common cold platform 10 similar to that shown in the first example. In this case, instead of a dilution refrigerator 30 and capillary line 32, the base of the enclosure 31 within Figure 2 could be formed into a cold platform 10 having a geometry similar to that within Figure 1.

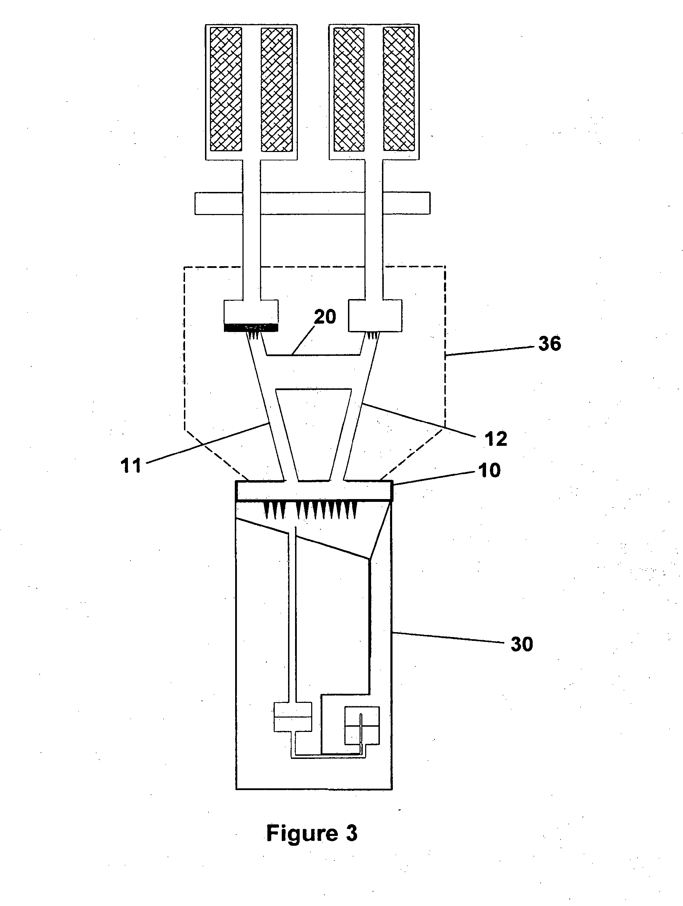

A further example is shown in Figure 3 in which a cold platform 10 is used to operate the helium-3 cycle of a dilution refrigerator 30. In this case, first and second heat pipes are provided to cool the cold platform. This cold platform 10, has a condensation surface beneath it which operates the helium-3 circulation within the dilution refrigerator 30. As is illustrated at 36, instead of the heat pipes 11, 12 a common enclosure may be provided to drive the cooling of the cold platform 10.

Although the above examples have been described with reference to cryogenic apparatus, it will be appreciated that analogous apparatus could also be used for higher temperature applications, although in such cases temperature instability problems are likely to be less important apart from in highly specialised applications. Therefore the invention finds particular application at cryogenic temperatures, particularly at ultra-low cryogenic temperatures less than 1 Kelvin.

## Claims

1. Cryogenic apparatus comprising:-
first and second single-shot refrigerators (1,2) having respective first and second condensation surfaces (13,14), wherein the first and second condensation surfaces are provided within an enclosure, the said surfaces (13,14) being selectively cooled when in use by the respective first and second single-shot refrigerators such that coolant gas condenses on the surfaces as liquid coolant;
the enclosure (20,11,12,10) containing a coolant gas; and,
a cold platform (10) which, when in use, receives the liquid coolant from the condensation surfaces; **characterised in that**:-
the enclosure is adapted to provide a path (20) for gaseous coolant between the first and second condensation surfaces, the path having a lower hydraulic impedance than that (11, 12) between each of the condensation surfaces (13,14) and the cold platform (10).

2. Apparatus according to claim 1, wherein the hydraulic impedance is substantially lower than that between each of the condensation surfaces (13,14) and the cold platform (10).

3. Apparatus according to claim 2, wherein the hydraulic impedance is at least 2 times lower than that between each of the condensation surfaces (13,14) and the cold platform (10).

4. Apparatus according to claim 3, wherein the hydraulic impedance is at least 5 times lower than that between each of the condensation surfaces (13,14) and the cold platform (10).

5. Apparatus according to claim 4, wherein the hydraulic impedance is at least 10 times lower than that between each of the condensation surfaces (13,14) and the cold platform (10).

6. Apparatus according to any of the preceding claims, wherein the enclosure comprises a tube (11, 12) between each of the condensation surfaces (13,14) and the cold platform (10), and a by-pass tube (20) positioned between the first and second condensation surfaces to provide the lower hydraulic impedance path.

7. Apparatus according to claim 6, wherein the tubes (11,12) between the condensation surfaces and the cold platform comprise heat pipes.

8. Apparatus according to claim 6 or claim 7, wherein the by-pass tube (20) is formed to provide a high thermal resistance between the condensation surfaces.

9. Apparatus according to any of claims 1 to 5, wherein the first and second condensation surfaces (13,14) are provided within a common chamber volume.

10. Apparatus according to claim 9, wherein the cold ptatform (10) is provided adjacent the common chamber.

11. Apparatus according to claim 9 or claim 10, wherein the distance between the first and second condensation surfaces (13,14) is less than the distances between each of the first and second condensation surfaces and the cold platform (10).

12. Apparatus according to claim 11, wherein the distance to the cold platform (10) is measured to the surface of the coolant liquid within the cold platform.

13. Apparatus according to any of the preceding claims, wherein at least one of the single-shot refrigerators (1,2) comprises an adsorption pump.

14. Apparatus according to any of the preceding claims, wherein at least one of the condensation surfaces is provided with projections (15,16) to promote the condensation of the coolant gas and the passage of the coolant, once condensed to liquid, to the cold platform.

15. Apparatus according to claim 14, wherein the one or more projections (15,16) are hollow frustoconical projections having a spiral cut-away groove in their surface.

16. Apparatus according to any of the preceding claims, where in the cold platform (10) comprises part of a dilution refrigerator.

17. Apparatus according to any of claims 1 to 15, wherein the cold platform (10) comprises part of an evaporation refrigerator.

18. Apparatus according to at least claim 9, wherein the common chamber is provided in fluid communication with the cold platform (10) in the form of a mixing chamber (33) of a dilution refrigerator (30).

19. Apparatus according to claim 18, wherein the dilution refrigerator (30) further comprises a still (34) and a conduit providing gaseous communication between the still and the common chamber volume so as to return gaseous coolant from the still to the common chamber.

20. Apparatus according to any of the preceding claims, wherein the coolant is helium-3, helium-4 or nitrogen.

21. Apparatus according to any of the preceding claims, wherein the apparatus is adapted to provide cooling at cryogenic temperatures.

## Patentansprüche

1. Kryogenische Vorrichtung, umfassend:
Erste und zweite Single-shot-Kühlmaschinen (1, 2) mit jeweiligen ersten und zweiten Kondensationsoberflächen (13, 14), wobei die ersten und zweiten Kondensationsflächen mit einem Gehäuse versehen sind, wobei die genannten Oberflächen (13, 14), wenn in Gebrauch, von den jeweiligen ersten und zweiten Single-shot-Kühlmaschinen derartig gekühlt werden, dass Kühlmittelgas auf den Oberflächen als flüssiges Kühlmittel kondensiert;
das ein Kühlmittelgas enthaltende Gehäuse (20, 11, 12, 10); und,
eine Kälteplattform (10), die, wenn in Gebrauch, das flüssige Kühlmittel von den Kondensationsflächen empfängt; **dadurch gekennzeichnet, dass**:
das Gehäuse angepasst ist, einen Weg (20) für gasförmiges Kühlmittel zwischen den ersten und zweiten Kondensationsflächen bereitzustellen, wobei der Weg eine geringere hydraulische Impedanz als die (11, 12) zwischen jeder der Kondensationsflächen (13,14) und der Kälteplattform (10) aufweist.

2. Vorrichtung nach Anspruch 1, wobei die hydraulische Impedanz im Wesentlichen geringer als jene zwischen jeder der Kondensationsflächen (13, 14) und der Kälteplattform (10) ist.

3. Vorrichtung nach Anspruch 2, wobei die hydraulische Impedanz im Wesentlichen 2-mal geringer als jene zwischen jeder der Kondensationsflächen (13, 14) und der Kälteplattform (10) ist.

4. Vorrichtung nach Anspruch 3, wobei die hydraulische Impedanz im Wesentlichen 5-mal geringer als jene zwischen jeder der Kondensationsflächen (13, 14) und der kalten Plattform (10) ist.

5. Vorrichtung nach Anspruch 4, wobei die hydraulische Impedanz im Wesentlichen 10-mal geringer als jene zwischen jeder der Kondensationsflächen (13, 14) und der Kälteplattform (10) ist.

6. Vorrichtung nach irgendeinem der vorangehenden Ansprüche, wobei das Gehäuse ein Rohr (11, 12) zwischen jeder der Kondensationsflächen (13, 14) und der Kälteplattform (10) und einem Bypass-Rohr (20) umfasst, das zwischen den ersten und zweiten Kondensationsflächen positioniert ist, um den Weg geringerer hydraulischer Impedanz bereitzustellen.

7. Vorrichtung nach Anspruch 6, wobei die Rohre (11, 12) zwischen den Kondensationsflächen und der Kälteplattform Wärmerohre umfassen.

8. Vorrichtung nach Anspruch 6 oder Anspruch 7, wobei das Bypass-Rohr (20) gebildet ist, um eine hohe Thermoresistenz zwischen den Kondensationsflächen bereitzustellen.

9. Vorrichtung nach irgendeinem der Ansprüche 1 bis 5, wobei die ersten und zweiten Kondensationsflächen (13, 14) innerhalb eines gemeinsamen Kammervolumens bereitgestellt sind.

10. Vorrichtung nach Anspruch 9, wobei die Kälteplattform (10) angrenzend an die gemeinsame Kammer bereitgestellt ist.

11. Vorrichtung nach Anspruch 9 oder Anspruch 10, wobei der Abstand zwischen den ersten und zweiten Kondensationsflächen (13, 14) geringer als die Abstände zwischen jeder der ersten und zweiten Kondensationsflächen und der Kälteplattform (10) ist.

12. Vorrichtung nach Anspruch 11, wobei der Abstand zur Kälteplattform (10) zur Oberfläche der Kühlmittelflüssigkeit innerhalb der Kälteplattform gemessen ist.

13. Vorrichtung nach irgendeinem der vorangehenden Ansprüche, wobei wenigstens eine der Single-shot-Kühhnaschinenn (1, 2) eine Adsorptionspumpe umfasst.

14. Vorrichtung nach irgendeinem der vorangehenden Ansprüche, wobei wenigstens eine der Kondensationsflächen mit Vorsprüngen (15, 16) versehen ist, um die Kondensation des Kühlmittelgases und den Durchfluss des Kühlmittels, sobald zu Flüssigkeit kondensiert, zur Kälteplattform zu fördern.

15. Vorrichtung nach Anspruch 14, wobei der eine oder mehrere Vorsprung/Vorsprünge (15, 16) hohle kegelstumpfförmige Vorsprünge mit einer spiralförmigen weggeschnittenen Nut in ihrer Oberfläche aufweisen.

16. Vorrichtung nach irgendeinem der vorangehenden Ansprüche, wobei die Kälteplattform (10) Teil eines Verdünnungskühlers umfasst.

17. Vorrichtung nach irgendeinem der Ansprüche 1 bis 15, wobei die Kälteplattform (10) Teil eines Verdampfungskühlers umfasst.

18. Vorrichtung nach wenigstens Anspruch 9, wobei die gemeinsame Kammer in Fluidverbindung mit der Kälteplattform (10) in Form einer Mischkammer (33) eines Verdünnungskühlers (30).

19. Vorrichtung nach Anspruch 18, wobei der Verdünnungskühler (30) einen Destillationsapparat (34) und eine Leitung umfasst, die gasförmige Verbindung zwischen dem Destillationsapparat und dem gemeinsamen Kammervolumen bereitstellt, um das gasförmige Kältemittel vom Destillationsapparat zur gemeinsamen Kammer zurückzuleiten.

20. Vorrichtung nach irgendeinem der vorangehenden Ansprüche, wobei das Kältemittel Helium-3, Helium-4 oder Stickstoff ist.

21. Vorrichtung nach irgendeinem der vorangehenden Ansprüche, wobei die Vorrichtung angepasst ist, Kühlung zu kryogenischen Temperaturen bereitzustellen.

## Revendications

1. Appareil cryogénique comprenant :
un premier et un deuxième réfrigérateur en mode single-shot (1,2) ayant une première et une deuxième surface de condensation (13, 14) respective, dans lequel les première et deuxième surfaces de condensation sont munies d'une enceinte, lesdites surfaces (13, 14) étant sélectivement refroidies lorsqu'elles sont utilisées par le premier et le deuxième réfrigérateur en mode single-shot respectif de sorte que le gaz réfrigérant se condense sur les surfaces sous forme de liquide réfrigérant ;
l'enceinte (20, 11, 12, 10) contenant un gaz réfrigérant ; et
une plateforme froide (10) qui, durant son utilisation, reçoit le liquide réfrigérant des surfaces de condensation, **caractérisé en ce que** :-
l'enceinte est adaptée pour procurer un chemin d'écoulement (20) pour le gaz réfrigérant entre la première et la deuxième surface de condensation, le chemin ayant une impédance hydraulique plus basse que celle (11, 12) qui existe entre chacune des surfaces de condensation (13, 14) et la plateforme froide (10).

2. Appareil selon la revendication 1, l'impédance hydraulique étant sensiblement plus basse que celle qui existe entre chacune des surfaces de condensation (13, 14) et la plateforme froide (10).

3. Appareil selon la revendication 2, dans lequel l'impédance hydraulique est au moins 2 fois plus basse que celle qui existe entre chacune des surfaces de condensation (13, 14) et la plateforme froide (10).

4. Appareil selon la revendication 3, dans lequel l'impédance hydraulique est au moins 5 fois plus basse que celle qui existe entre chacune des surfaces de condensation (13, 14) et la plateforme froide (10).

5. Appareil selon la revendication 4, dans lequel l'impédance hydraulique est au moins 10 fois plus basse que celle qui existe entre chacune des surfaces de condensation (13, 14) et la plateforme froide (10).

6. Appareil selon l'une quelconque des revendications précédentes, dans lequel l'enceinte comprend un tube (11, 12) entre chacune des surfaces de condensation (13, 14) et la plateforme froide (10) et un tube de déviation (20) positionné entre la première et la deuxième surface de condensation afin de procurer le chemin de l'impédance hydraulique plus basse.

7. Appareil selon la revendication 6, dans lequel les tubes (11, 12) qui existent entre les surfaces de condensation et la plateforme froide comprennent des caloducs.

8. Appareil selon la revendication 6 ou la revendication 7, dans lequel le tube de déviation (20) est formé pour procurer une résistance thermique élevée entre les surfaces de condensation.

9. Appareil selon l'une quelconque des revendications 1 à 5, dans lequel les première et deuxième surfaces de condensation (13, 14) sont pourvues au sein d'un volume de chambre commune.

10. Appareil selon la revendication 9, dans lequel la plateforme froide (10) est placée contiguë à la chambre commune.

11. Appareil selon la revendication 9 ou la revendication 10, dans lequel la distance entre la première et la deuxième surface de condensation (13, 14) est inférieure aux distances entre chacune de la première et de la deuxième surface de condensation et de la plateforme froide (10).

12. Appareil selon la revendication 11, dans lequel la distance jusqu'à la plateforme froide (10) est mesurée jusqu'à la surface du liquide réfrigérant qui se trouve dans la plateforme froide.

13. Appareil selon l'une quelconque des revendications précédentes, dans lequel au moins un des réfrigérateurs en mode single-shot (1,2) comprend une pompe d'adsorption.

14. Appareil selon l'une quelconque des revendications précédentes, dans lequel au moins une des surfaces de condensation est pourvue de parties saillantes (15, 16) pour favoriser la condensation du gaz réfrigérant et le passage du milieu réfrigérant, une fois qu'il s'est condensé en liquide, jusqu'à la plateforme froide.

15. Appareil selon la revendication 14, dans lequel la une ou plusieurs partie(s) saillante(s) (15, 16) est/sont des partie(s) saillante(s) frustoconique(s) creuse(s) ayant une rainure de découpage en spirale sur leur surface.

16. Appareil selon l'une quelconque des revendications précédentes, dans lequel la plateforme froide (10) comprend une partie d'un réfrigérateur à dilution.

17. Appareil selon l'une quelconque des revendications 1 à 15, dans lequel la plateforme froide (10) comprend une partie d'un réfrigérateur à évaporation.

18. Appareil selon au moins la revendication 9, dans lequel la chambre commune est pourvue en communication fluidique avec la plateforme froide (10) sous forme d'une chambre de mélange (33) d'un réfrigérateur à dilution (30).

19. Appareil selon la revendication 18, dans lequel le réfrigérateur à dilution (30) comprend en outre un alambic (34) et une conduite procurant une communication gazeuse entre l'alambic et le volume de la chambre commune de manière à renvoyer le gaz réfrigérant de l'alambic à la chambre commune.

20. Appareil selon l'une quelconque des revendications précédentes, dans lequel le milieu de refroidissement est l'hélium-3, l'hélium-4 ou l'azote.

21. Appareil selon l'une quelconque des revendications précédentes, dans lequel l'appareil est adapté pour procurer un refroidissement à des températures cryogéniques.
